# DEMANDE DE BREVET EUROPEEN

(11) **EP 1 416 615 A1**
(43) Date de publication de la demande: **06.05.2004**
(21) Numéro de dépôt: 03024634.2
(22) Date de dépôt: 27.10.2003
(51) Int. Cl.: H02K 7/18, F03G 5/04

(54) **Installation pour la production d'électricité**

(30) Priorité: 29.10.2002 BE 200200619
(71) Demandeur: WALRAVENS, FRANS, JOZEF, 1081 BRUXELLES (KOEKELBERG) (BE)
(72) Inventeur: WALRAVENS, FRANS, JOZEF, 1081 BRUXELLES (KOEKELBERG) (BE)

(57) **Abrégé**

Installation pour la production d'électricité, comprenant une génératrice (2) dont le rotor est entraîné par un animal (7).

## Description

La présente invention concerne la production d'électricité.

Elle concerne plus particulièrement une installation pour la production d'électricité.

L'électricité est généralement produite au moyen de génératrices (dynamos ou alternateurs) dont le rotor est entraîné par un moteur. L'énergie motrice la plus souvent utilisée pour produire de l'électricité à usage domestique ou industriel est d'origine fossile ou nucléaire. Ces types d'énergie génèrent divers désavantages, notamment au plan écologique.

On a aussi songé à utiliser l'énergie éolienne, mais les installations utilisant des éoliennes présentent divers inconvénients. Elles sont notamment tributaires de la vitesse du vent et elles nuisent au paysage.

L'invention vise à remédier à ces désavantages des installations connues, en fournissant une installation nouvelle pour la production d'électricité, dans laquelle l'énergie motrice ne nuit pas à l'environnement et peut être facilement régulée.

En conséquence, l'invention concerne une installation pour la production d'électricité, comprenant une génératrice dont le rotor est couplé à un organe moteur, l'installation se caractérisant en ce que l'organe moteur comprend un animal.

L'invention réalise la transformation de la force animale en électricité propre. Dans la présente invention, le travail est fourni par la force animale et transformé en électricité propre au moyen d'une génératrice productrice de courant. La force animale qui a déjà trouvé des applications dans le passé, n'a jamais encore été utilisée pour la production d'électricité. C'est ainsi que cette invention contribue à palier le manque de production d'énergie écologique. L'installation peut se faire dans un hangar ou à ciel ouvert avec une protection adéquate. Dans l'installation selon l'invention, la génératrice peut être indifféremment une dynamo pour la production de courant continu ou un alternateur pour la production de courant alternatif. L'animal doit être un animal dont la force de traction est suffisante pour entraîner la génératrice. On peut par exemple choisir des bovins ou des chevaux. Les chevaux sont préférés, principalement les chevaux de trait et les chevaux de manège.

Dans l'installation selon l'invention, la génératrice est normalement fixe, par exemple montée sur un bâti.

Dans une forme de réalisation particulière de l'installation selon l'invention, l'animal est attelé à une flèche qui est fixée transversalement à un arbre relié au rotor. Dans cette forme de réalisation de l'invention, on peut avantageusement prévoir plusieurs flèches uniformément réparties autour de l'arbre et atteler un animal (par exemple un cheval) à chaque flèche.

Dans l'installation selon l'invention, un transformateur de couple peut avantageusement être interposé entre le rotor et l'arbre auquel est attelé l'animal.

L'installation selon l'invention convient pour la production d'électricité à usage domestique et/ou à usage industriel. Elle peut notamment convenir pour une alimentation autonome d'une habitation, d'un groupe d'habitations ou d'un atelier. Pour ces applications, la puissance nominale de la génératrice de l'installation selon l'invention est habituellement supérieure à quelques kW, généralement à 3 kW, de préférence à 5 kW. Dans le cas d'habitations regroupant des ménages de 2 à 6 personnes, la puissance nominale de la génératrice peut par exemple se situer entre 5 et 10 kW. Dans le cas d'un atelier, elle peut parfois excéder 10 kW voire 15 kW et atteindre des valeurs de 20 à 60 kW, voire davantage. En pratique, la puissance nominale maximum de la génératrice va être déterminée par la configuration des lieux et par le nombre maximum d'animaux qu'il est possible d'atteler à la génératrice.

L'installation selon l'invention peut également, avec avantage, être intégrée à un réseau public de distribution d'électricité.

L'installation selon l'invention est simple et bon marché.

L'invention présente de nombreux avantages et fournit une réponse à de nombreux problèmes écologiques.

La production d'énergie par la transformation de travail animal en électricité répond à un véritable cri d'alarme, lancé par la conférence de Kyoto, pour protéger notre environnement sur notre planète en cherchant de nouvelles sources de production d'énergie propre. L'installation selon l'invention est de conception simple et trouve surtout une application intéressante (sans pour autant que cela soit limitatif) dans les activités agricoles. Elle n'occasionne pas de bruit ni de désagrément dans le paysage. Elle ne constitue pas de danger pour les oiseaux ni pour l'aviation, comme c'est le cas avec les éoliennes qui, par ailleurs, sont coûteuses et nuisent au paysage.

Il est évident que l'invention vise une production massive d'énergie qui dépendra de l'utilisation importante de l'installation.

L'invention ouvre un nouveau marché pour le commerce d'animaux de trait et, d'un point de vue social, elle est de nature à créer des emplois liés à la vie rurale tels que vétérinaires, palefreniers, maréchaux-ferrants, produits alimentaires pour animaux, etc.

L'invention peut être d'application dans tous les pays où les centrales nucléaires seront arrêtées ou le seront dans un avenir proche, dans les pays qui veulent supprimer leur dépendance vis-à-vis du marché pétrolier international, ainsi que dans les pays qui comprennent un excès d'entreprises agricoles. Ces derniers pays peuvent dès lors permettre aux paysans de produire de l'électricité pour assurer leur survie sur place et leur éviter une migration vers les villes
où ils viendraient grossir le rang des chômeurs.

C'est ici que la politique agricole européenne et internationale peut jouer un rôle essentiel dans la diffusion, sur le plan mondial, de cette nouvelle technique de production d'électricité.

Une utilisation massive sur le plan mondial, de cette invention est tout bénéfice pour l'économie ; elle comblera le manque d'énergie propre et maintiendra notre environnement sain.

Des particularités et détails de l'invention vont apparaître au cours de la description suivante des dessins annexés.

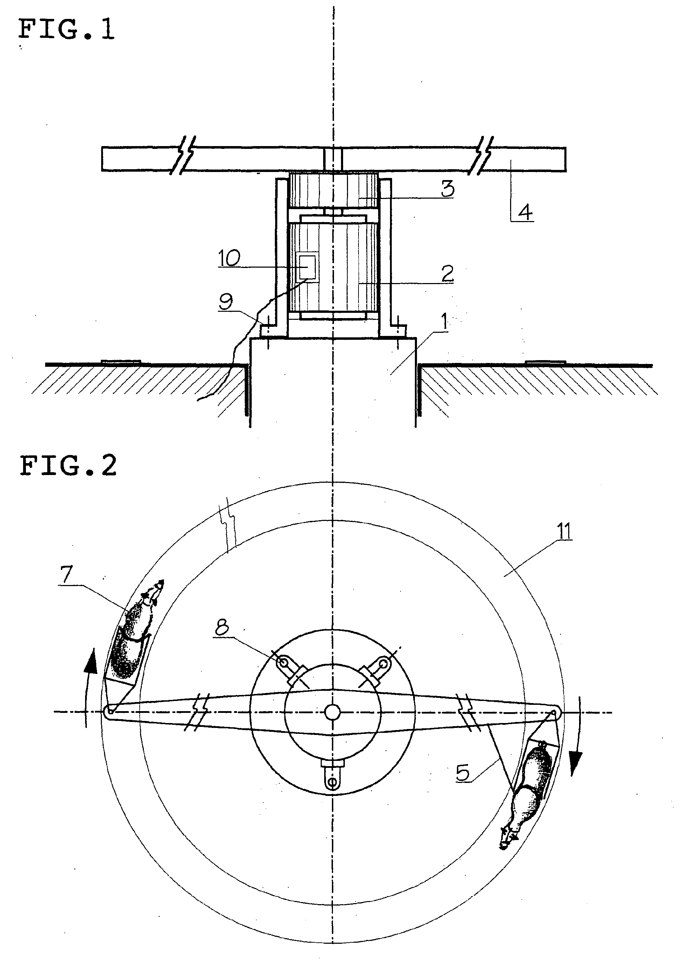

La figure 1 est une vue de face, en élévation, d'une forme de réalisation particulière de l'installation selon l'invention ;

La figure 2 est une vue en plan de l'installation de la figure 1.

Dans ces figures, des mêmes notations de référence désignent des mêmes éléments.

Pour construire l'installation selon l'invention, représentée aux figures, on réalise d'abord un socle en béton 1 dans le sol, au centre de l'espace délimité par une piste annulaire 11 au sol durci. La piste annulaire 11 peut être la piste d'un manège.

La génératrice 2 (par exemple un alternateur) est fixée sur le socle 1 au moyen de boulons 9 traversant des pieds 8 de la génératrice. La génératrice 2 est positionnée sur le socle 1 de manière que l'axe de son rotor soit sensiblement vertical. On couple l'arbre du rotor à une crémaillère d'embrayage 3 (ou transformateur de couple) et on y attache une paire de flèches horizontales 5. Des chevaux de manège 7 sont attelés aux deux flèches 5. En courant sur la piste annulaire 11, les chevaux 7 entraînent le rotor de la génératrice 2 qui, ainsi, génère de l'électricité. Le courant produit par la génératrice 2 est dirigé vers un compteur électrique (non représenté) via une batterie et un stabilisateur (non représentés), pour ensuite être livré et vendu à une même fréquence à un distributeur de courant électrique.

## Revendications

1. Installation pour la production d'électricité, comprenant une génératrice (2) dont le rotor est couplé à un organe moteur, **caractérisée en ce que** l'organe moteur comprend un animal (7).

2. Installation selon la revendication 1, **caractérisée en ce que** l'animal (7) est attelé à une flèche (5) fixée transversalement à un arbre relié au rotor.

3. Installation selon la revendication 2, **caractérisée en ce que** l'organe moteur comprend plusieurs animaux de trait (7) qui sont attelés respectivement à plusieurs flèches (5) uniformément réparties autour de l'arbre.

4. Installation selon la revendication 2 ou 3, **caractérisée en ce qu'**un transformateur de couple (3) est interposé entre l'arbre et le rotor.

5. Installation selon l'une quelconque des revendications 1 à 4, **caractérisée en ce que** l'animal (7) est un cheval de trait ou de manège.

6. Installation selon la revendication 5, **caractérisée en ce que** la génératrice (2) est disposée au centre d'un manège (11) et l'animal (7) est un cheval de manège.

7. Installation selon l'une quelconque des revendications 2 à 6, **caractérisée en ce que** la génératrice (2) est fixée sur un socle (1) de manière que l'axe du rotor soit sensiblement vertical.

8. Installation selon l'une quelconque des revendications 1 à 7, **caractérisée en ce que** la génératrice (2) comprend un alternateur.

9. Installation selon l'une quelconque des revendications 1 à 8, **caractérisée en ce que** la génératrice (2) a une puissance nominale supérieure à 3 kW.

10. Installation selon la revendication 9, **caractérisée en ce que** la puissance nominale de la génératrice (2) est sensiblement comprise entre 5 et 60 kW.
